(19) Europäisches Patentamt / European Patent Office / Office européen des brevets

(11) **EP 1 943 567 B1**

(12) **EUROPÄISCHE PATENTSCHRIFT**

(45) Veröffentlichungstag und Bekanntmachung des Hinweises auf die Patenterteilung:
**16.12.2009 Patentblatt 2009/51**

(21) Anmeldenummer: 06793499.2

(22) Anmeldetag: **14.09.2006**

(51) Int Cl.:
**G05B 19/00** *(2006.01)*

(86) Internationale Anmeldenummer:
**PCT/EP2006/066346**

(87) Internationale Veröffentlichungsnummer:
**WO 2007/036435 (05.04.2007 Gazette 2007/14)**

(54) **ÜBERTRAGUNGSGLIED MIT BEREICHSWEISEM KENNFELD**

TRANSMISSION MEMBER WITH A SEGMENTED CHARACTERISTIC DIAGRAM

ELEMENT REGULATEUR A CARTOGRAPHIE SECTORIELLE

(84) Benannte Vertragsstaaten:
**DE FR IT**

(30) Priorität: **30.09.2005 DE 102005047092**

(43) Veröffentlichungstag der Anmeldung:
**16.07.2008 Patentblatt 2008/29**

(73) Patentinhaber: **ROBERT BOSCH GMBH**
**70442 Stuttgart (DE)**

(72) Erfinder:
• **BECKERT, Matthias**
  **72768 Reutlingen (DE)**
• **EICHLER, Michael**
  **72108 Rottenburg/Oberndorf (DE)**

(56) Entgegenhaltungen:
**EP-A- 1 482 217**

**Beschreibung**

Stand der Technik

Die vorliegende Erfindung betrifft ein Übertragungsglied mit mindestens einem Eingang und mindestens einem Ausgang, wobei das Übertragungsglied einen funktionalen Zusammenhang zwischen der an dem Eingang anliegenden Eingangsgröße und der am Ausgang abgreifbaren Ausgangsgröße liefert und wobei der funktionale Zusammenhang in einem Kennfeld abgelegt ist.

Bei einer Regelung eines Pulsweitenmodulierten (PWM) Signals mittels Kennfeld (F) wird eine Stellgröße (t) in Abhängigkeit einer Regelgröße (R) eingestellt, wobei ein funktionaler Zusammenhang

$$t = F(R)$$

besteht. Bei einer Implementierung in Hardware, so dass also kein Softwarealgorithmus zur Berechnung von t eingesetzt wird, werden üblicherweise für eine feste Anzahl von Stützstellen N die Werte $F(R_N)$ bereitgehalten und für alle Zwischenwerte wird F(R) auf den Wert der benachbarten Stützstelle gelegt oder ein Zwischenwert durch Approximation gebildet.

Bildet die Regelgröße R nicht alle relevanten Einflüsse zur Ermittlung des erforderlichen Tastverhältnisses ab, z. B. durch einen Temperaturgang, unterschiedliche Implementierung der Schaltung, die von der Stellgröße bedient wird, oder dergleichen mehr, so muss das Kennfeld parametrisierbar sein. Dies geschieht dadurch, dass alle Werte $F(R_N)$ als programmierbare Parameter in einem Speicher (RAM) implementiert sind oder indem eine Mehrzahl x der Kennfelder $F_x(R_N)$ als Konstanten in einem nichtflüchtigen Speicher (ROM) in der Hardware vorgehalten werden und das benötigte Kennfeld über einen programmierbaren Parameter ausgewählt wird.

Aus der EP 1482 217 A2 ist eine Getriebeanordnung bekannt, bei der während eines Schaltvorgangs des Lastschaltgetriebes eines Fahrzeugs die Fahrkupplung zumindest teilweise automatisch öffenbar ist und ein verbleibendes Drehmoment vom Antriebsaggregat auf die Antriebsachse übertragbar ist. Die Fahrkupplung kann dabei sowohl manuelle vom Fahrer oder auf ein entsprechendes Steuersignal einer Steuereinrichtung hin betätigt werden. Zur Berechnung des Steuersignals erfasst die Steuereinheit den Betriebszustand des Lastschaltgetriebes und die Auslastung des Antriebsaggregats. Ausgehend von diesen Daten wird eine Kennlinie zur Ansteuerung berechnet, in dem der elektrische Strom, mit dem die Magnetspule eines Druckventils beaufschlagt wird, als Funktion der Zeit bestimmt wird.

Probleme des Standes der Technik

Derzeit bekannte Schaltungen zur Implementierung von Kennfeldern erfordern einen hohen Hardwareaufwand. Aufgabe der vorliegenden Erfindung ist es daher, die Implementierung eines parametrisierbaren Kennfeldes in Hardware so zu optimieren, dass bei hoher Abbildungsgenauigkeit des Kennfeldes eine geringe Anzahl programmierbarer Parameter und Konstanten benötigt wird und damit der Hardwareaufwand und die Kosten verringert werden.

Vorteil der Erfindung

Dieses Problem wird gelöst durch ein Übertragungsglied gemäß Anspruch 1.

Vorteilhafte Ausgestaltungen des Übertragungsglieds sind in den Ansprüchen 2-6 definiert.

Das eingangs genannte Problem wird auch gelöst durch ein Verfahren zum Betrieb eines Übertragungsgliedes gemäß Anspruch 7.

Nachfolgend wird ein Ausführungsbeispiel der vorliegenden Erfindung anhand der beiliegenden Zeichnung näher erläutert. Dabei zeigen:

Fig. 1     eine Skizze eines erfindungsgemäßen Kennfeldes;

Fig. 2     eine Skizze eines erfindungsgemäßen Steuereinrichtung;

Fig. 3     ein Ablaufdiagramm des Verfahrens.

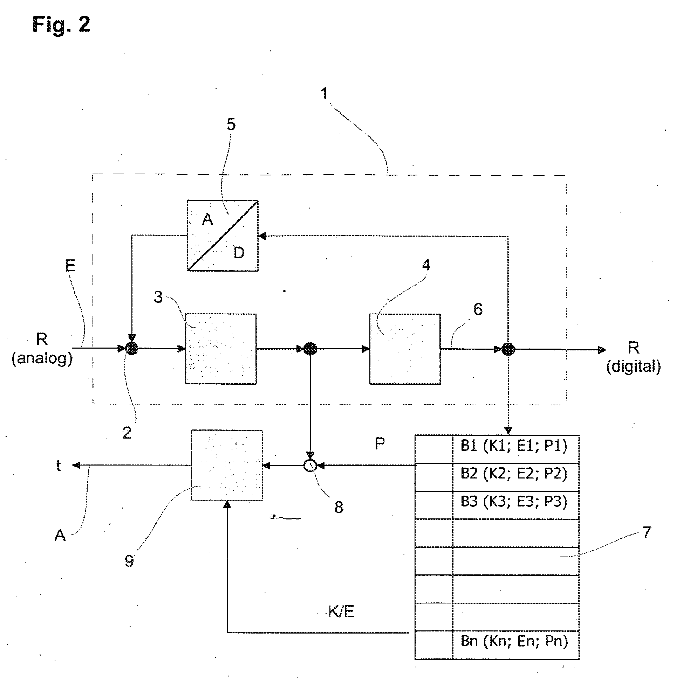

Der Wertebereich einer Regelgröße R, siehe dazu Fig. 2, wird abhängig von der geforderten Auflösung mit n Stützstellen im System abgebildet und durch A/D-Wandlung als digitaler Wert im System zur Verfügung gestellt.

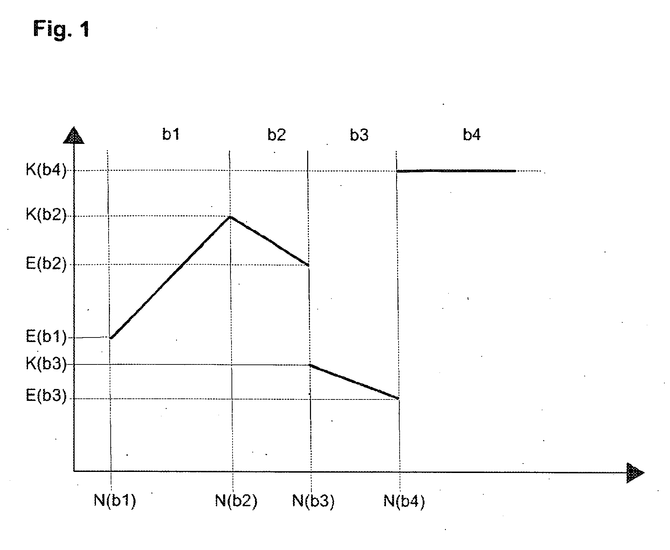

Das Kennfeld $F_x(R)$ mit x={1.. Anzahl der Kennfelder} wird gemäß Fig. 1 in die Approximationsbereiche $b_i$ mit

i={1..m} aufgeteilt. Für jeden Bereich $b_i$ sind folgende programmierbare Parameter gespeichert:

- Grenzwert $N(b_i)$ der Regelgröße $R(N \in n)$ für den die Approximationsparameter $b_i$ gelten, d.h. Approximation in $b_i$ erfolgt wenn $N(b_i) < R < N(b_{i+1})$

- Startwert $K(b_i)$ der Stellgröße t, wenn $R = N(b_i)$

- Endwert $E(b_i)$ des Bereiches $b_i$ wenn $n = N(b_{i+1})-1$. Auf die Implementierung des Parameters E kann verzichtet werden, wenn $F_x(R)$ immer stetig ist. Dann wird einfach $F_x(b_{imax}) = F_x(N(b_{(i+1)}))$

- Steigung $P(b_i)$ zur Berechnung der Stellgröße F in den Grenzen $N(b_i) < Rn < N(b_{i+1})$, wobei

$$F(R) = P(b_i) * (n - N(b_i)) + K(b_i) \text{ bzw.}$$

$$F(R) = P(bi) * (N(b_{i+1})-n) + E(b_i)$$

Fig. 1 zeigt ein Beispiel eines Kennfeldes mit vier Bereichen $b_i$, hier b1, b2, b3 sowie b4. Für jeden Bereich $b_i$ ist jeweils ein Startwert $K(b_i)$ sowie ein Endwert $E(b_i)$ festgelegt. Gehen die einzelnen Bereiche stetig ineinander über, wie dies beispielsweise beim Übergang vom Bereich b1 auf den Bereich b2 der Fall ist, sind Endwerte des vorhergehenden Bereiches und Startwerte des nachfolgenden Bereiches jeweils identisch, im folgenden Beispiel ist also der Endwert E(b1) des Bereiches b1 identisch mit dem Startwert K(b2) des Bereiches b2. Sind die Übergänge nicht stetig, wie dies beispielsweise beim Übergang des Bereichs b2 auf den Bereich b3 sowie des Bereichs b3 auf den Bereich b4 der Fall ist, so sind jeweils Startwert $K(b_i)$ und Endwert $E(b_i)$ eines jeden Bereiches abzulegen. Zwischen Startwert K $(b_i)$ und Endwert $E(b_i)$ wird die Stellgröße F interpoliert. Im vorliegenden Beispiel wird eine lineare Interpolation gewählt. Grundsätzlich wären hier aber auch andere Interpolationen, beispielsweise polynominale oder trigonometrische oder dergleichen, möglich. Die Steigung P $(b_i)$ kann entweder aus Start- und Endwert sowie dem zugehörigen Werten der Führungsgröße berechnet werden, oder aber als zusätzlicher Datensatz in dem Kennfeld abgelegt werden. In diesem Fall gehört zu jedem Bereich bi eine untere Grenze $N(b_i)$, eine obere Grenze $N(b_i+1)$, ein Startwert $K(b_i)$ sowie ein Endwert $E(b_i)$ sowie ein Steigungswert $P(b_i)$.

Fig. 2 zeigt eine erfindungsgemäße Steuerkette als Blockschaltbild. Eine Führungsgröße R lieg tan einem Eingang E an und wird auf einen an sich bekannten Delta-Sigma-Umsetzer 1 gelegt. Der Delta-Sigma-Umsetzer 1 umfasst einen Subtrahierer 2, einen Quantisierer 3, einen Integrierer 4 sowie einen Digital-AnalogWandler 5. Am Ausgang 6 des Integrierers 4 liegt das digitalisierte Signal an. Das Signal des Quantisierers 3 wird auf einen Summierer 9 gelegt, an dessen Ausgang A die Stellgröße t anliegt. Mit Hilfe des digitalisierten Signals R wird aus einem Kennfeld 7 der aktuelle Approximationsbereich $b_i$ ausgewählt und der Startwert $K(b_i)$, Endwert $E(b_i)$ und Steigung $P(b_i)$ zur Berechnung der Stellgröße wirksam. Bei Wechsel des Approximationsbereiches $b_i$ wird der Summierer 9 zunächst mit dem neuen Startwert $K(b_i)$ bzw. Endwert $E(b_i)$ vorgeladen.

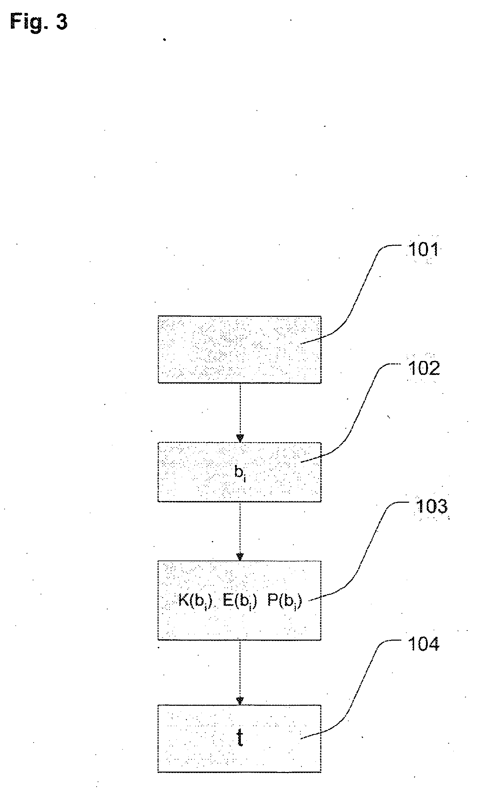

Die Erzeugung der Ausgangsgröße der Regelung (PWM-Tastverhältnis oder dergleichen) erfolgt durch sukzessive Approximation mit dem Parametersatz des aktuellen Bereiches $b_i$ unmittelbar aus der quantisierten Delta-Information des Analog-Digital-Wandlers zur Erfassung der Regelgröße. Die Auswahl des Parametersatzes erfolgt durch Vergleich des Digitalwertes der Regelgröße (n) mit den Grenzwerten der Approximationsbereiche $N(b_i)$. Fig. 3 zeigt ein Ablaufdiagramm des Verfahrens. Beginnend mit Schritt 101 wird die quantisierte Delta-Information des Analog-Digital-Wandlers bestimmt. In Schritt 102 wird der quantisierten Delta-Information ein Approximationsbereich $b_i$ aus dem Kennfeld 7 ausgewählt und in Schritt 103 der Startwert $K(b_i)$, Endwert $E(b_i)$ und Steigung $P(b_i)$ bestimmt. In Schritt 104 wird mit dem zuvor bestimmten Startwert $K(b_i)$, dem Endwert $E(b_i)$ und der Steigung $P(b_i)$ mittels des Summierers 9 die Stellgröße t bestimmt.

**Patentansprüche**

1.  Übertragungsglied mit mindestens einem Eingang (E) und mindestens einem Ausgang (A), wobei

- das Übertragungsglied einen funktionalen Zusammenhang (t = F(R)) zwischen der an dem Eingang anliegenden Eingangsgröße (R) und der am Ausgang abgreifbaren Ausgangsgröße (t) liefert,

- der funktionale Zusammenhang (t = F(R)) in einem Kennfeld (7) abgelegt ist,
- das Kennfeld (7) aus mehreren Bereichen ($b_i$) mit jeweils
- einer unteren Grenze ($N(b_i)$), einer oberen Grenze ($N(b_{i+1})$), einem Startwert ($K(b_i)$), einem Endwert ($E(b_i)$) und jeweils einem Steigungswert ($P(b_i)$) besteht, wobei der unteren Grenze ($N(b_i)$) ein Funktionswert ($t(i)=F(N(b_i))$) und der oberen Grenze ($N(b_{i+1})$) ein Funktionswert ($t(i+1)=F(N(b_{i+1}))$) zugeordnet ist,
- das Übertragungsglied einen Delta-Sigma-Umsetzer (1) mit einem Quantisierer (3) und einem Integrierer (4) umfasst, wobei am Ausgang (6) des Integrierers (4) die digitalisierte Eingangsgröße (R) anliegt,
- mit Hilfe der digitalisierten Eingangsgröße (R) aus dem Kennfeld (7) ein Bereich ($b_i$) ausgewählt wird und der jeweilige Startwert ($K(b_i)$), Endwert ($E(b_i)$) und Steigung ($P(b_i)$) zur Berechnung der Stellgröße derart wirksam wird, die Ausgangsgröße (t) zwischen der unteren Grenze und der oberen Grenze des ausgewählten Bereichs ($b_i$) interpoliert wird.

2. Übertragungsglied nach Anspruch 1, **dadurch gekennzeichnet, dass** die am Ausgang abgreifbare Ausgangsgröße (t) ein pulsweitenmoduliertes Signal ist.

3. Übertragungsglied nach Anspruch 1, **dadurch gekennzeichnet, dass** die Bereiche ($b_i$) stetig ineinander übergehen.

4. Übertragungsglied nach Anspruch 1, **dadurch gekennzeichnet, dass** nur die unteren Grenzen ($N(b_i)$) oder die oberen Grenzen ($N(b_{i+1})$) abgelegt sind.

5. Übertragungsglied nach einem der vorhergehenden Ansprüche, **dadurch gekennzeichnet, dass** dieses mehrere Kennfelder (7) umfasst, die über mindestens einen Parameter auswählbar sind.

6. Übertragungsglied nach einem der vorhergehenden Ansprüche, **dadurch gekennzeichnet, dass** die Interpolation linear ist.

7. Verfahren zum Betrieb eines Übertragungsgliedes mit mindestens einem Eingang (E) und mindestens einem Ausgang (A), wobei

- das Übertragungsglied einen funktionalen Zusammenhang (t = F(R)) zwischen der an dem Eingang anliegenden Eingangsgröße (R) und der am Ausgang abgreifbaren Ausgangsgröße (t) liefert,
- der funktionale Zusammenhang (t = F(R)) in einem Kennfeld (7) abgelegt ist,
- das Kennfeld (7) aus mehreren Bereichen ($b_i$) mit jeweils
- einer unteren Grenze ($N(b_i)$), einer oberen Grenze ($N(b_{i+1})$), einem Startwert ($K(b_i)$), einem Endwert ($E(b_i)$) und jeweils einem Steigungswert ($P(b_i)$) besteht, wobei der unteren Grenze ($N(b_i)$) ein Funktionswert ($t(i)=F(N(b_i))$) und der oberen Grenze ($N(b_{i+1})$) ein Funktionswert ($t(i+1)=F(N(b_{i+1}))$) zugeordnet ist,
- das Übertragungsglied einen Delta-Sigma-Umsetzer (1) mit einem Quantisierer (3) und einem Integrierer (4) umfasst, wobei am Ausgang (6) des Integrierers (4) die digitalisierte Eingangsgröße (R) anliegt,
- mit Hilfe der digitalisierten Eingangsgröße (R) aus dem Kennfeld (7) ein Bereich ($b_i$) ausgewählt wird und der jeweilige Startwert ($K(b_i)$), Endwert ($E(b_i)$) und Steigung ($P(b_i)$) zur Berechnung der Stellgröße derart wirksam wird, die Ausgangsgröße (t) zwischen der unteren Grenze und der oberen Grenze des ausgewählten Bereichs ($b_i$) interpoliert wird.

**Claims**

1. Transmission element having at least one input (E) and at least one output (A),

- the transmission element providing a functional relationship (t = F(R)) between the input variable (R) applied to the input and the output variable (t) which can be tapped off at the output,
- the functional relationship (t = F(R)) being stored in a family of characteristics (7),
- the family of characteristics (7) comprising a plurality of ranges ($b_i$) each having
- a lower limit ($N(b_i)$), an upper limit ($N(b_{i+1})$), a starting value ($K(b_i)$), a final value ($E(b_i)$) and a respective slope value ($P(b_i)$), the lower limit ($N(b_i)$) being assigned a function value ($t(i)=F(N(b_i))$) and the upper limit ($N(b_{i+1})$) being assigned a function value ($t(i+1)=F(N(b_{i+1}))$),
- the transmission element comprising a delta-sigma converter (1) with a quantizer (3) and an integrator (4), the digitized input variable (R) being applied to the output (6) of the integrator (4),
- a range ($b_i$) being selected from the family of characteristics (7) with the aid of the digitized input variable (R), and the respective starting value ($K(b_i)$), final value ($E(b_i)$) and slope ($P(b_i)$) becoming effective, in order to calculate the manipulated variable, in such a manner that the output variable (t) is interpolated between the lower limit and the upper limit of the selected range (bi).

2. Transmission element according to Claim 1, **characterized in that** the output variable (t) which can be tapped off at the output is a pulse-width-modulated signal.

3. Transmission element according to Claim 1, **characterized in that** the ranges ($b_i$) constantly merge into one another.

4. Transmission element according to Claim 1, **characterized in that** only the lower limits ($N(b_i)$) or the upper limits ($N(b_{i+1})$) are stored.

5. Transmission element according to one of the preceding claims, **characterized in that** it comprises a plurality of families of characteristics (7) which can be selected using at least one parameter.

6. Transmission element according to one of the preceding claims, **characterized in that** the interpolation is linear.

7. Method for operating a transmission element having at least one input (E) and at least one output (A),

- the transmission element providing a functional relationship (t = F(R)) between the input variable (R) applied to the input and the output variable (t) which can be tapped off at the output,
- the functional relationship (t = F(R)) being stored in a family of characteristics (7),
- the family of characteristics (7) comprising a plurality of ranges ($b_i$) each having
- a lower limit ($N(b_i)$), an upper limit ($N(b_{i+1})$), a starting value ($K(b_i)$), a final value ($E(b_i)$) and a respective slope value ($P(b_i)$), the lower limit ($N(b_i)$) being assigned a function value ($t(i)=F(N(b_i))$) and the upper limit ($N(b_{i+1})$) being assigned a function value ($t(i+1)=F(N(b_{i+1}))$),
- the transmission element comprising a delta-sigma converter (1) with a quantizer (3) and an integrator (4), the digitized input variable (R) being applied to the output (6) of the integrator (4),
- a range ($b_i$) being selected from the family of characteristics (7) with the aid of the digitized input variable (R), and the respective starting value ($K(b_i)$), final value ($E(b_i)$) and slope ($P(b_i)$) becoming effective, in order to calculate the manipulated variable, in such a manner that the output variable (t) is interpolated between the lower limit and the upper limit of the selected range ($b_i$).

**Revendications**

1. Organe de transmission qui présente au moins une entrée (E) et au moins une sortie (A), et dans lequel

- l'organe de transmission délivre une association fonctionnelle (t = F(R)) entre la grandeur d'entrée (R) appliquée sur l'entrée et la grandeur de sortie (t) qui peut être reprise à la sortie,
- l'association fonctionnelle (t = F(R)) est conservée dans un champ de caractéristiques (7),
- le champ des caractéristiques (7) est constitué de plusieurs parties ($b_i$) qui présentent chacune :

- une limite inférieure ($N(b_i)$), une limite supérieure ($N(b_{i+1})$), une valeur initiale ($K(b_i)$), une valeur finale ($E(b_i)$) et chaque fois une valeur de pente ($P(b_i)$), une valeur ($t(i) = F(N(b_i))$) de la fonction étant associée à la limite inférieure ($N(b_i)$) et une valeur ($t(i+1) = F(N(b_{i+i}))$) de la fonction étant associée à la limite supérieure ($N(b_{i+1})$),
- l'organe de transfert comprend un convertisseur delta-sigma (1) doté d'un quantificateur (3) et d'un intégrateur (4), la grandeur d'entrée (R) numérisée étant appliquée sur la sortie (6) de l'intégrateur (4),
- à l'aide de la grandeur d'entrée (R) numérisée, une partie ($b_i$) du champ de caractéristiques (7) est sélectionnée et la valeur initiale particulière ($K(b_i)$), la valeur finale particulière ($E(b_i)$) et la pente particulière ($P(b_i)$) sont utilisées pour calculer la grandeur de réglage en interpolant la grandeur de sortie (t) entre la limite inférieure et la limite supérieure de la partie ($b_i$) sélectionnée.

2. Organe de transmission selon la revendication 1, **caractérisé en ce que** la grandeur de sortie (t) qui peut être reprise sur la sortie est un signal à pulsations modulées en largeur.

3. Organe de transmission selon la revendication 1, **caractérisé en ce que** les parties ($b_i$) se prolongent l'une dans l'autre sans discontinuité.

**4.** Organe de transmission selon la revendication 1, **caractérisé en ce que** seules les limites inférieures ($N(b_i)$) ou les limites supérieures ($N(b_{i+1})$) sont conservées.

**5.** Organe de transmission selon l'une des revendications précédentes, **caractérisé en ce qu'**il comprend plusieurs champs de caractéristiques (7) qui peuvent être sélectionnés par l'intermédiaire d'au moins un paramètre.

**6.** Organe de transmission selon l'une des revendications précédentes, **caractérisé en ce que** l'interpolation est linéaire.

**7.** Procédé de conduite d'un organe de transmission qui présente au moins une entrée (E) et au moins une sortie (A), dans lequel :

- l'organe de transmission délivre une association fonctionnelle ($t = F(R)$) entre la grandeur d'entrée (R) appliquée sur l'entrée et la grandeur de sortie (t) qui peut être reprise à la sortie,
- l'association fonctionnelle ($t = F(R)$) est conservée dans un champ de caractéristiques (7),
- le champ des caractéristiques (7) est constitué de plusieurs parties ($b_i$) qui présentent chacune :

- une limite inférieure ($N(b_i)$), une limite supérieure ($N(b_{i+1})$), une valeur initiale ($K(b_i)$), une valeur finale ($E(b_i)$) et chaque fois une valeur de pente ($P(b_i)$), une valeur ($t(i) = F(N(b_i))$) de la fonction étant associée à la limite inférieure ($N(b_i)$) et une valeur ($t(i+1) = F(N(b_{i+1}))$) de la fonction étant associée à la limite supérieure ($N(b_{i+1})$),
- l'organe de transfert comprend un convertisseur delta-sigma (1) doté d'un quantificateur (3) et d'un intégrateur (4), la grandeur d'entrée (R) numérisée étant appliquée sur la sortie (6) de l'intégrateur (4),
- à l'aide de la grandeur d'entrée (R) numérisée, une partie ($b_i$) du champ de caractéristiques (7) est sélectionnée et la valeur initiale particulière ($K(b_i)$), la valeur finale particulière ($E(b_i)$) et la pente particulière ($P(b_i)$) sont utilisées pour calculer la grandeur de réglage en interpolant la grandeur de sortie (t) entre la limite inférieure et la limite supérieure de la partie ($b_i$) sélectionnée.

**Fig. 1**

**Fig. 2**

**Fig. 3**

```
                                    ┌──────────────┐ ⌐― 101
                                    │░░░░░░░░░░░░░░│
                                    │░░░░░░░░░░░░░░│
                                    │░░░░░░░░░░░░░░│
                                    └──────┬───────┘      ⌐― 102
                                           │
                                           ▼
                                    ┌──────────────┐
                                    │░░░░░░░░░░░░░░│
                                    │░░░░  bᵢ  ░░░░│
                                    └──────┬───────┘
                                           │              ⌐― 103
                                           ▼
                                    ┌──────────────┐
                                    │              │
                                    │K(bᵢ) E(bᵢ) P(bᵢ)│
                                    │              │
                                    └──────┬───────┘   ⌐― 104
                                           │
                                           ▼
                                    ┌──────────────┐
                                    │              │
                                    │      t       │
                                    │              │
                                    └──────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1482217 A2